(19) Europäisches Patentamt
European Patent Office
Office européen des brevets

(11) EP 2 623 534 A1

(12) **EUROPEAN PATENT APPLICATION**
published in accordance with Art. 153(4) EPC

(43) Date of publication:
**07.08.2013 Bulletin 2013/32**

(21) Application number: **11828877.8**

(22) Date of filing: **21.09.2011**

(51) Int Cl.:
***C08G 59/42*** *(2006.01)*

(86) International application number:
**PCT/JP2011/071441**

(87) International publication number:
**WO 2012/043320 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 JP 2010218776**

(71) Applicant: **DIC Corporation**
**Tokyo 174-8520 (JP)**

(72) Inventors:
- **KAWAHARA Hideaki**
**Ichihara-shi**
**Chiba 290-8585 (JP)**
- **YAMAZAKI Tetsuya**
**Ichihara-shi**
**Chiba 290-8585 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **WATER-DISPERSIBLE EPOXY RESIN, AQUEOUS EPOXY RESIN COMPOSITION AND CURED ARTICLE THEREOF**

(57) An object of the present invention is to provide a water-soluble epoxy resin that has high water-solubility, maintains emulsion stability for epoxy resin, and is capable of forming a cured product that has excellent coating film strength and corrosion resistance. Another object is to provide a cured product that has water resistance, alkali resistance, and higher coating film strength and corrosion resistance.

The present invention provides a water-soluble epoxy resin obtained by causing an epoxy resin (B) having two or more epoxy groups in a molecule to react with a carboxy-group-containing compound (A) obtained by reacting a polyethylene glycol monoalkyl ether (A-1) having a number-average molecular weight of 400 to 10000 and an acid anhydride (A-2) derived from a polyvalent carboxylic acid; a water-soluble epoxy resin composition containing the water-soluble epoxy resin and an epoxy resin having two or more epoxy groups in a molecule; and a water-based epoxy resin composition in which the water-soluble epoxy resin composition is dispersed in an water-based solvent.



Printed by Jouve, 75001 PARIS (FR)

## Description

### Technical Field

The present invention relates to water-based epoxy resin compositions that are suitable for use in paints, adhesives, fiber-binding agents, concrete primers, etc., and in particular to a water-based epoxy resin composition capable of forming products that have corrosion resistance and adhesiveness without degrading the workability and storage stability of varnishes.

### Background Art

Epoxy resin compositions are widely used in various fields including paints, adhesives, laminated plates, electric and electronic parts, etc., since they form cured products with high mechanical properties, high corrosion resistance, high adhesiveness, etc. However, epoxy resins have been mostly used as compositions diluted with organic solvents and there has been a growing anticipation for water-based epoxy resins due to environmental concerns in recent years.

One example of water-based epoxy resins known is epoxy resin emulsions prepared by high-speed stirring in a homo mixer using a surfactant. However, the disadvantage of the epoxy resin emulsions is that because of the surfactants, the emulsions have poor water resistance, poor adhesion to substrates or top coats, and low mechanical stability.

Patent Literature 1 below describes an example of water-based epoxy resins free of surfactants, i.e., a reaction product of a diglycidyl ether of bisdiphenol, bisdiphenol, and a diglycidyl ether of polyoxyalkylene glycol. Patent Literature 2 below describes a reaction product of a diglycidyl ether of bisdiphenol, bisdiphenol, a diglycidyl ether of polyoxyalkylene glycol, and diisocyanate. Patent Literature 3 below discloses a condensation product of a difunctional or higher functional epoxy resin, a polyvalent phenol, and a condensation product of an aliphatic polyol, a difunctional or higher functional epoxy resin, and mono- and polyisocyanates.

However, these materials have problems such as poor water resistance, poor corrosion resistance, poor alkali resistance, low water dispersibility, and poor emulsion stability attributable to some of primary hydroxyl groups of polyethylene glycol remaining in the composition, insufficient crosslinking densities, etc.

Patent Literature 4 discloses a water-dispersible epoxy resin that addresses these problems and proposes a water-dispersible epoxy resin obtained by allowing an epoxy resin having two or more epoxy groups in a molecule to react with a carboxyl-group-containing compound so that the ratio of the number of epoxy groups in the epoxy resin having two or more epoxy groups in a molecule to the number of carboxyl groups in the carboxyl-group-containing compound is in the range of 0.75 to 1.5, the carboxyl-group-containing compound being obtained by allowing an acid anhydride compound to react with a polyoxyethylene polyol compound having a molecular weight of 400 to 10000 in such a manner that the acid anhydride group/hydroxyl group equivalent ratio is in the range of 1.0 to 1.1. According to Patent Literature 4, this structure improves the water resistance, corrosion resistance, alkali resistance, water dispersibility, and emulsion stability.

### Citation List

#### Patent Literature

PTL 1: U.S. Patent No. 4,315,044
PTL 2: U.S. Patent No. 4,399,242
PTL 3: Japanese Unexamined Patent Application Publication No. 2-38443
PTL 4: Japanese Unexamined Patent Application Publication No. 7-206982

### Summary of Invention

#### Technical Problem

However, the water-dispersible epoxy resin disclosed in Patent Literature 4 has a polyethylene glycol chain introduced into the main chain and thus the crosslinking density of the cured products cannot be increased. Thus, the strength of the coating films and corrosion resistance have been insufficient.

An object of the present invention is to provide a water-dispersible epoxy resin that has good water dispersibility, maintains emulsion stability for epoxy resin, and is capable of forming a cured product having high coating film strength

and corrosion resistance, a water-dispersible epoxy resin composition containing the water-dispersible epoxy resin, a water-based epoxy resin composition containing the water-dispersible epoxy resin composition, the water-dispersible epoxy resin, and a water-based solvent, and a cured product that uses these, has water resistance and alkali resistance, and exhibits higher coating film strength and corrosion resistance. Solution to Problem

The inventors of the present invention have conducted extensive studies to address these problems and have found that when a difunctional water-dispersible epoxy resin having a polyethylene glycol chain introduced into the side chain is used, the crosslinking density during curing can be increased, and as a result, a water-based epoxy resin composition can be provided which can maintain high water dispersibility and emulsion stability for epoxy resin. They have also found that a cured product of a water-based epoxy resin composition can be provided which has excellent water resistance, alkali resistance, coating film strength, and corrosion resistance, and made the present invention.

That is, the present invention provides a water-dispersible epoxy resin obtained by allowing a compound (A) having two or more carboxy groups in a molecule to react with an epoxy resin (B) having two or more epoxy groups in a molecule, in which the compound (A) is obtained by an esterification reaction of a polyethylene glycol monoalkyl ether (A-1) having a number-average molecular weight of 400 to 10000 and an acid anhydride (A-2) derived from a polyvalent carboxylic acid having three or four carboxy groups in a molecule in such a manner that two or more carboxy groups are present in a molecule.

The present invention also provides a method for producing a water-dispersible epoxy resin, the method including a step of obtaining a compound (A) having two or more carboxy groups in a molecule by an esterification reaction of a polyethylene glycol monoalkyl ether (A-1) having a number-average molecular weight of 400 to 10000 and an acid anhydride (A-2) derived from a polyvalent carboxylic acid having three or four carboxy groups in a molecule in such a manner that the ratio of acid anhydride groups (-COOCO-) of the acid anhydride (A-2) to hydroxyl groups of the polyethylene glycol monoalkyl ether (A-1) is within the range of 1 to 1.2; and a step of allowing the compound (A) to react with an epoxy resin (B) having two or more epoxy groups in a molecule.

The present invention also provides a water-dispersible epoxy resin composition including 5 to 70 parts by mass of the water-dispersible epoxy resin ($\alpha$) and 30 to 95 parts by mass of an epoxy resin ($\beta$) (excluding the water-dispersible epoxy resin ($\alpha$)) having two or more epoxy groups in a molecule, and a water-based epoxy resin composition including this water-dispersible epoxy resin composition dispersed in a water-based solvent.

The present invention also provides a cured product obtained by curing the water-dispersible epoxy resin composition.

Advantageous Effects of Invention

According to the water-dispersible epoxy resin of the present invention, the water dispersibility and the emulsion stability are excellent, and a cured product having high coating film strength and corrosion resistance can be provided. The water-dispersible epoxy resin composition of the present invention is capable of providing a cured product having high water resistance, alkali resistance, coating strength, and corrosion resistance.

Brief Description of Drawings

[Fig. 1] Fig. 1 is a GPC chart of methoxy polyethylene glycol used as a synthetic raw material in step 1 of Production Example 1.
[Fig. 2] Fig. 2 is a GPC chart of a carboxyl-group-containing compound [(A)-1] obtained in step 1 of Production Example 1.
[Fig. 3] Fig. 3 is an IR chart of carboxyl-group-containing compound [(A)-1] obtained in step 1 of Production Example 1.
[Fig. 4] Fig. 4 is a $C^{13}$NMR chart of a water-dispersible epoxy resin (1) obtained in step 2 of Production Example 1.
Description of Embodiments

A water-dispersible epoxy resin of the present invention is obtained by allowing a compound (A) having two or more carboxy groups in a molecule (hereinafter may be simply referred to as "carboxy-group-containing compound (A)") to react with an epoxy resin (B) having two or more epoxy groups in a molecule. The compound (A) is obtained by an esterification reaction of a polyethylene glycol monoalkyl ether (A-1) having a number-average molecular weight of 400 to 10000 and a polyvalent carboxylic acid having three or more carboxy groups in a molecule or its acid anhydride (A-2) so that at least two carboxy groups are present in a molecule. The detailed descriptions are presented below.

The compound (A) used in the present invention (hereinafter simply referred to as "carboxy-group-containing compound (A)") is obtained by an esterification reaction of a polyethylene glycol monoalkyl ether (A-1) having a number-average molecular weight of 400 to 10000 and a polyvalent carboxylic acid having three or more carboxy groups in a

molecule or its acid anhydride (A-2) so that at least two carboxy groups are present in a molecule.

An example of the polyethylene glycol monoalkyl ether (A-1) having a number-average molecular weight of 400 to 10000 used in the present invention is a polyethylene glycol monoalkyl ether represented by general formula (1) below:

[Chem. 1]

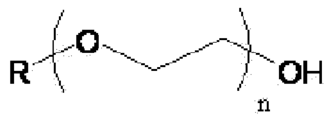

In the formula, R represents an alkyl group, specifically, an alkyl group having 1 to 12 carbon atoms and more preferably 1 to 4 carbon atoms, such as a methyl group or an ethyl group; and n represents the number of repeating ethylene oxide groups. The number-average molecular weight of the polyethylene glycol of the polyethylene glycol monoalkyl ether used in the present invention is 400 to 10000 and preferably 1000 to 4000. The number-average molecular weight is a value calculated from (Eq. 1) below based on the hydroxyl value:

[Math. 1]

$$\text{Number-average molecular weight} = 56100/\text{hydroxyl value}$$

$$[\text{mgKOH/g}] \qquad (\text{Eq. } 1)$$

The acid anhydride (A-2) derived from a polyvalent carboxylic acid having three or four carboxy groups in a molecule used in the present invention may be any known acid anhydride, such as an acid anhydride derived from an aromatic polyvalent carboxylic acid or an cyclic fatty polyvalent carboxylic acid, as long as it is obtainable by intermolecular dehydration of a polyvalent carboxylic acid having three or four carboxy groups and preferably three carboxy groups in a molecule, but is preferably an acid anhydride derived from an aromatic polyvalent carboxylic acid. Examples of the acid anhydride derived from an aromatic polyvalent carboxylic acid include trimellitic anhydride, pyromellitic anhydride, and benzophenone-3,3',4,4'-tetracarboxylic anhydride. Among these, trimellitic anhydride is preferable. Examples of the acid anhydride derived from a cyclic fatty polyvalent carboxylic acid include hydrogenated trimellitic anhydride and hydrogenated pyromellitic anhydride.

The esterification reaction is carried out in such a manner that the ratio of the acid anhydride groups (-COOCO-) of the acid anhydride (A-2) to the hydroxyl groups in the polyethylene glycol monoalkyl ether (A-1) is within the range of 1 to 1.2 and more preferably within the range of 1.0 to 1.1. The ratio of the acid anhydride groups is preferably not smaller than 1 since hydroxyl groups will remain in the water-dispersible epoxy resin.

The reaction temperature of the esterification reaction is 40 to 140°C and more preferably 80°C to 130°C. The reaction time for the esterification reaction is 1 to 5 hours and more preferably 1 to 3 hours. A known catalyst or solvent can be used in the esterification reaction if needed.

The water-dispersible epoxy resin of the present invention (hereinafter may also be referred to as "water-dispersible epoxy resin (α)") is obtained by reacting a carboxyl-group-containing compound (A) and an epoxy resin (B) having two or more epoxy groups in a molecule.

The epoxy resin (B) used in the present invention may be any known epoxy resin. Among known epoxy resins, the following are particularly preferable as the epoxy resin (B): an epoxy resin obtained from epichlorohydrin or β-methylepichlorohydrin and bisphenol A, bisphenol F, or bisphenol sulfone, polyglycidyl ethers of polyhydric alcohols such as polyglycidyl ethers of phenol novolac resins and cresol novolac resins, polyglycidyl ethers of alkylene oxide adducts of bisphenol A, polypropylene glycol, 1,6-hexanediol, trimethylolpropane, and glycerin, polyglycidyl ethers of polycarboxylic acid such as adipic acid, phthalic acid, and dimer acid, and polyglycidylamines. An epoxy resin prepared by modifying the above described epoxy resin with a polyphenol such as bisphenol A or bisphenol F or with a polycarboxylic acid such as adipic acid or sebacic acid is also preferable. Among these, an epoxy resin obtained from a phenol compound having two hydroxyl groups in a molecule and epichlorohydrin, in particular, an epoxy resin obtained from bisphenol A

or bisphenol F and epichlorohydrin is more preferable. The epoxy equivalent of these epoxy resins is more preferably 150 to 200.

The reaction of the carboxy-group-containing compound (A) and the epoxy resin (B) having two or more epoxy groups in a molecule is carried out so that the ratio of the epoxy resin (B) per mole of the carboxy-group-containing compound (A) is 1.5 mol or more and 2.5 mol or less and preferably 1.8 mol or more and 2.2 mol or less. The ratio of the epoxy resin (B) is preferably not less than 1.5 mol since the water-dispersible epoxy resin (α) tends to exhibit a higher molecular weight, become viscous, or exhibit degraded solubility. The ratio of the epoxy resin (B) is preferably not more than 2.5 mol since the amount of unreacted epoxy resin (B) increases and the water dispersibility tends to decrease.

A catalyst may be used for the reaction of the carboxy-group-containing compound (A) and the epoxy resin (B). Examples of the catalyst include tertiary amines, such as triethylamine, tributylamine, benzyldimethylamine, 2,4,6-tris(dimethylaminomethyl)phenol, and N-methylpiperazine, and salts thereof; imidazoles, such as 2-methylimidazole, 2-phenylimidazole, 2-undecylimidazole, 2-ethyl-4-methylimidazole, 1-cyanoethyl-2-methylimidazole, 2,4-dicyano-6-[2-methylimidazolyl-1]-ethyl-S-triazine, and 2-ethyl-4-methylimidazole tetraphenylborate, and salts thereof; diazabicyclo compounds such as 1,5-diazabicyclo[5,4,0]-7-undecane, 1,5-diazabicyclo[4,3,0]-5-nonene, 1,4-diazabicyclo[2,2,2,]octane, and 1,8-diazabicyclo[5.4.0]undecene-7-tetraphenylborate; phosphines such as tributylphosphine, triphenylphosphine, tris(dimethoxyphenyl)phosphine, tris(hydroxypropyl)phosphine, and tris(cyanoethyl)phosphine; and phosphonium salts such as tetraphenylphosphonium salts, methyltributylphosphonium salts, methyltricyanoethylphosphonium salts, and tetrabutylphosphonium salts. Among these, phosphonium salts not containing benzene rings are most preferable since they are resistant to coloring. In the case where a catalyst is used, the amount of catalyst is preferably in the range of 0.01 to 5 parts by mass relative to 100 parts by mass of the water-dispersible epoxy resin (α). In this case, the reaction temperature is preferably within the range of 70 to 170°C and more preferably within the range of 80 to 120°C. The reaction time is preferably within the range of 3 to 10 hours and more preferably within the range of 3 to 8 hours.

The epoxy equivalent of the water-dispersible epoxy resin (α) obtained by the reaction of the carboxy-group-containing compound (A) and the epoxy resin (B) is preferably in the range of 600 to 6000 [g/eq] and more preferably in the range of 900 to 2500 [g/eq]. The epoxy equivalent is preferably 600 [g/eq] or more since the water dispersibility tends be high and is preferably 6000 [g/eq] or less since the water resistance tends to improve.

The water-dispersible epoxy resin (α) obtained as such is preferably a water-dispersible epoxy resin represented by general formula (I) below:

[Chem. 2]

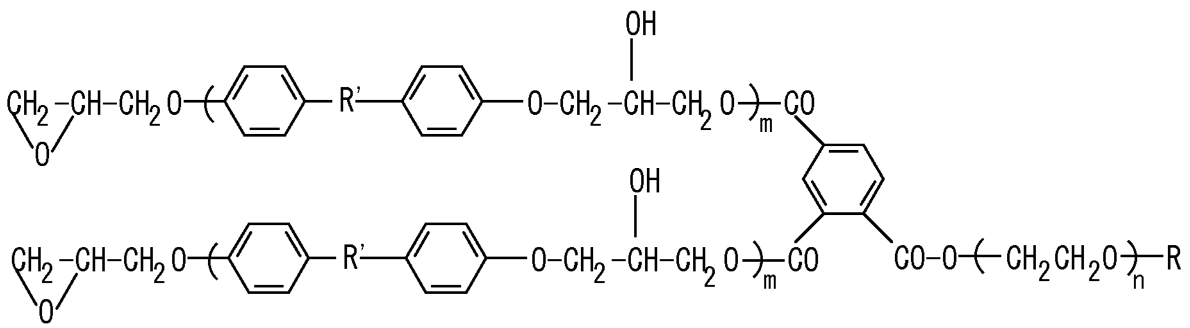

(where R represents an alkyl group having 1 to 12 carbon atoms, R' represents an alkylidene group having 1 to 3 carbon atoms or a sulfonyl group; and m and n each represent the number of repeating units). Particularly preferable is a water-dispersible epoxy resin represented by general formula (I) with R representing an alkyl group having 1 to 4 carbon atoms, R' representing a methylene group or a 2,2-propylene group, and m representing 1.

The water-dispersible epoxy resin composition according to the present invention is a composition that contains the water-dispersible epoxy resin (α) described above and an epoxy resin (β) having two or more epoxy groups in a molecule (hereinafter may be simply referred to as "epoxy resin (β)") different from the water-dispersible epoxy resin (α). Since the water-dispersible epoxy resin (α) is mixed with a different epoxy resin, a water-dispersible epoxy resin composition that exhibits self-emulsifiability in water-based solvents can be obtained.

As for the mixing ratios of the water-dispersible epoxy resin (α) and the epoxy resin (β) in the water-dispersible epoxy resin composition, the ratio of the former is preferably in the range of 5 to 70 parts by mass and more preferably in the range of 10 to 50 parts by mass and the ratio of the latter is preferably in the range of 95 to 30 parts by mass and

more preferably in the range of 90 to 50 parts by mass. When mixing is conducted at such ratios, the water-dispersible epoxy resin composition of the present invention exhibits excellent dispersibility in water-based solvents. The ratio of the water-dispersible epoxy resin (α) in the water-dispersible epoxy resin composition of the present invention is preferably 5 parts by mass or more since the emulsion stability is enhanced and is preferably 70 parts by mass or less since water resistance is improved.

The epoxy resin (B) can be used as the epoxy resin (β). In particular, an epoxy resin obtained from epichlorohydrin and bisphenol A and/or bisphenol F and polyglycidyl ethers of phenol novolac resins and cresol novolac resins are preferable.

A water-based epoxy resin composition of the present invention contains the water-dispersible epoxy resin composition and a water-based solvent. The mixing ratio of the epoxy resin composition to the water-based solvent in the water-based epoxy resin composition is preferably in the range of epoxy resin composition/water-based solvent = 10 to 100/90 to 0 (mass ratio) and more preferably in the range of epoxy resin composition/water-based solvent = 50 to 100/50 to 0 (mass ratio).

The water-based solvent may be water or a mixture of water and a water-soluble solvent. The water-soluble solvent may be any solvent that can homogeneously dissolve the reaction products, i.e., the water-dispersible epoxy resin (α) and the epoxy resin (β), and water and that is inactive to these components. Examples thereof include esters such as ethyl acetate, 3-methoxybutyl acetate, methoxypropyl acetate, and cellosolve acetate; alcohols such as methanol, ethanol, and isopropanol, cellosolves such as methyl cellosolve, ethyl cellosolve, propyl cellosolve, butyl cellosolve, isobutyl cellosolve, and tert-butyl cellosolve, glymes such as monoglyme, diglyme, and triglyme, propylene glycol monoalkyl ethers such as propylene glycol monomethyl ether, propylene glycol monoethyl ether, propylene glycol monobutyl ether, propylene glycol monoisobutyl ether, and propylene glycol mono-tert-butyl ether, and ketones such as acetone and methyl ethyl ketone. Among these, cellosolves, propylene glycol monoalkyl ethers, and ketones are most preferable.

The timing for mixing the water-dispersible epoxy resin composition and the water-based solvent may be any. For example, the water-dispersible epoxy resin composition of the present invention and the water-based solvent may be mixed in advance and the mixture may be transported to the site. Alternatively, the water-dispersible epoxy resin composition of the present invention and the water-based solvent may be mixed with each other at the site.

The water-based epoxy resin composition of the present invention can be cured at room temperature or low temperature by using a known basic curing agent.

Examples of the basic curing agent include aliphatic polyamines, alicyclic polyamines, Mannich bases, amine-epoxy addition products, polyamide polyamines, and liquid aromatic polyamines.

Examples of the aliphatic polyamines used as the basic curing agent include polyalkylene polyamines such as diethylenetriamine, triethylenetriamine, tetraethylenepentamine, and 1,4-bis-(3-aminopropyl)piperazine, m-xylenediamine, and p-xylenediamine.

Examples of the alicyclic polyamines used as the basic curing agent include 1,2-diaminocyclohexane, 1,4-diamino-3,6-diethylcyclohexene, and isophoronediamine.

Examples of the Mannich bases used as the basic curing agent include condensation products of (1) a polyamine such as triethylenetriamine, isophoronediamine, m-xylenediamine, and p-xylenediamine, (2) an aldehyde such as formaldehyde, and (3) a mono- or higher valent cresol or xylenol or a phenol such as p-tert-butylphenol or resorcin having at least one site reactive to aldehydes in the nucleus.

Examples of the amine epoxy addition products used as the basic curing agent include (1) reaction products of a polyamine (a) such as triethylenetriamine, tetraethylenepentamine, isophoronediamine, m-xylenediamine, or p-xylenediamine and an epoxy resin (b) such as a glycidyl ether such as phenyl glycidyl ether, butyl glycidyl ether, diglycidyl ether of bisphenol A, or diglycidyl ether of bisphenol F; and (2) reaction products of the polyamine described above and a glycidyl ester such as "Cardura E" (trade mark, product of Yuka Shell Epoxy K.K.).

Examples of the polyamide polyamines used as the basic curing agent include those obtained by reaction of a polyamine and a polycarboxylic acid or a dimerized fatty acid, such as a reaction product between ethylene diamine and a dimer acid.

Examples of the liquid aromatic polyamines used as the basic curing agent include reaction products of aromatic polyamines and glycidyl ethers or glycidyl esters. Examples of the aromatic polyamines include diaminodiphenylmethane and diaminodiphenylsulfone. Examples of the glycidyl ethers include phenyl glycidyl ether, butyl glycidyl ether, a diglycidyl ether of bisphenol A, and a diglycidyl ether of bisphenol F. Examples of the glycidyl esters include "Cardura E".

The amount of the curing agent used is within a normal range. Preferably, the epoxy equivalent of the water-based epoxy resin composition of the present invention and the amine equivalent of the basic curing agent satisfy the range of epoxy equivalent/amine equivalent ratio = 0.75 to 1.25.

The water-dispersible epoxy resin of the present invention has a hydrophilic group in the side chain and thus has high water dispersibility. The water-dispersible epoxy resin of the present invention also contains epoxy groups in a molecule, thus exhibits affinity with other epoxy compounds, and can be used as a dispersing agent. The water-dispersible epoxy resin self-emulsifies in a water-based solvent and shows excellent water dispersibility.

The water-dispersible epoxy resin and the water-dispersible epoxy resin composition of the present invention and an emulsion composition prepared by emulsifying these can be produced by any known methods. The obtained emulsion composition and the like can be used by adequate known methods.

The water-based epoxy resin composition of the present invention may contain other resin components such as polyester-based water-based resins and acryl-based water-based resins as needed as long as the properties are not degraded.

The water-based epoxy resin composition of the present invention may also contain various additives as necessary, such as an anti-cissing agent, an anti-sagging agent, a flowing agent, a defoaming agent, an accelerator, a UV absorber, and a light stabilizer.

The usage of the water-based epoxy resin composition of the present invention is not particularly limited. Examples of the usage include paints, adhesives, fiber-binding agents, and concrete primers.

In order to use the water-based epoxy resin composition of the present invention in the paint application, various pigments such as rust preventing pigments, coloring pigments, and body pigments, and various additives are preferably blended as needed. Examples of the rust preventing pigments include flake pigments such as zinc powder, aluminum phosphomolybdate, zinc phosphate, aluminum phosphate, barium chromate, aluminum chromate, and graphite. Examples of the coloring pigments include carbon black, titanium oxide, zinc sulfide, and colcothar. Examples of the body pigments include barium sulfate, calcium carbonate, talc, and kaolin. From the viewpoints of coating performance, coating workability, etc., total amount of these materials is preferably 10 to 70 parts by mass relative to a total of 100 parts by mass of the water-based epoxy resin composition and the curing agent added as needed.

The coating method employed in using the water-based epoxy resin composition of the present invention as paints is not particularly limited. The coating may be performed with roll coaters, sprays, brushes, spatulas, bar coaters, or the like, or by dip coating or electropainting. After the coating process, room-temperature drying or heat curing may be performed. When the heat curing is to be performed, the heating temperature is preferably within the range of 50 to 250°C and more preferably in the range of 60 to 230°C. The heating time is preferably in the range of 2 to 30 minutes and more preferably in the range of 5 to 20 minutes.

The water-based epoxy resin composition of the present invention is used in general usages, such as water-based paints for building interior, water-based paints for building exterior and inorganic construction materials, water-based paints for preventing rusting of iron parts, and water-based paints for automobile maintenance, and industrial usages such as automotive coatings and beverage cans. The water-based epoxy resin composition of the present invention has excellent corrosion resistance and set-to-touch property and thus is suitable for use as water-based paints for preventing rusting of iron parts, i.e., heavy-duty coating used in steel structures and bridges, and in particular as water-based paints for undercoating for preventing rusting of iron parts.

No particular limitation is imposed in using the water-based epoxy resin composition of the present invention as an adhesive. For example, the water-based epoxy resin composition is applied to a substrate by using a spray, a brush, or a spatula, and the bonding surface of the substrate is attached. The bonded portion can form a strong bonding layer when fixed to the periphery or pressed. Steel sheets, concrete, mortar, wood, resin sheets, and resin films are suitable as the substrate. If needed, the water-based epoxy resin composition is preferably applied after various surface treatments such as physical treatment, e.g., polishing, electrical treatment, e.g., corona treatment, and chemical treatment, e.g., chemical conversion treatment.

No particular limitation is imposed in using the water-based epoxy resin composition of the present invention as a fiber binding agent. For example, the water-based epoxy resin composition may be applied by using a roller coater to fibers immediately after spinning and the resulting fiber strands may be taken-up and dried. Any fibers may be used. Examples of the fibers include inorganic fibers such as glass fibers, ceramic fibers, asbestos fibers, carbon fibers, and stainless steel fibers, natural fibers such as cotton and linen, and synthetic fibers such as polyesters, polyamide, and urethanes. Examples of the form of the substrate include staple fibers, filament fibers, yarn, mats, and sheets. The amount of the composition as the fiber binding agent is preferably 0.1 to 2 mass% on a solid resin basis relative to the fibers.

No particular limitation is imposed in using the water-based epoxy resin composition of the present invention as the concrete primer. Rolls, sprays, brushes, spatulas, or trowels may be used.

[EXAMPLES]

The present invention will now be described in further detail through examples which do not limit the scope of the present invention. Note that in the following examples, all parts, percentages, ratios, etc., are on a mass basis unless otherwise noted. GPC measurement, IR, and NMR spectrum were measured under the following conditions.

1) GPC:

· Instrument: HLC-8220 GPC produced by TOSOH Corporation, column: TSK-GEL G2000HXL + G2000HXL + G3000HXL + G4000HXL produced by TOSOH Corporation
· Solvent: tetrahydrofuran
· Flow rate: 1 mL/min
· Detector: RI

2) IR: FT/IR-4100 produced by JASCO Corporation
3) NMR: JNM-ECA500 produced by JEOL Ltd.

· Sample concentration: 30% (w/v)
· Measurement solvent: $CDCl_3$
· Number of times of accumulation: 8000

(Production Example 1) Production of main ingredient

<Step 1>

Into a four-necked glass flask equipped with a thermometer, a stirrer, a nitrogen inlet tube, and a cooling tube, 2000 g of methoxypolyethylene glycol having a number-average molecular weight of 2000 (hydroxyl value: 28.0 mg-KOH/g) and 192 g of trimellitic anhydride were charged and reaction was conducted for 5 hours at 100°C at an acid anhydride group/hydroxyl group equivalent ratio of 1.0. As a result, a carboxy-group-containing compound [(A)-1] having an acid value of 51 mgKOH/g was obtained.
Fig. 1 is a GPC chart of methoxypolyethylene glycol used as a synthetic raw material in step 1. Figs. 2 and 3 respectively show a GPC chart and an IR chart of the carboxy-group-containing compound [(A)-1] obtained in step 1.
GPC charts in Figs. 1 and 2 confirm that the addition reaction of the trimellitic anhydride to methoxypolyethylene glycol occurred and that there occurred a shift toward a higher molecular weight side. The IR chart of Fig. 3 confirms ester bonds at about 1720 $cm^{-1}$ generated by reaction between methoxypolyethylene glycol and trimellitic anhydride. The results above show that the carboxy-group-containing compound [(A)-1] obtained in step 1 is a compound represented by formula (A)-1:
[Chem. 3]

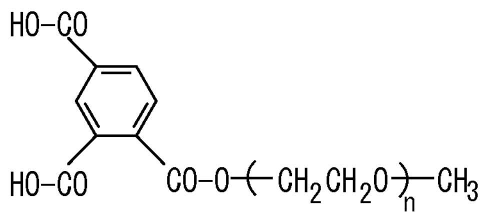

(where, n represents the number of repeating units).

<Step 2>

Into a four-necked glass flask equipped with a thermometer, a stirrer, a nitrogen inlet tube, and a cooling tube, 1096 g of the carboxy-group-containing compound [(A)-1] having an acid value of 51 mgKOH/g obtained in step 1, 376 g of a bisphenol A type epoxy resin [(B)] ("EPICLON 850S" produced by DIC Corporation), and 4.4 g of triphenyl phosphine were charged and the reaction was conducted at 120°C for 8 hours with 1.0 mol (2 epoxy equivalent) of epoxy resin per equivalent of carboxy groups. The reaction was terminated at an acid value of 0 mgKOH/g and a water-dispersible epoxy resin (1) represented by formula (AE1) below was obtained:
[Chem. 4]

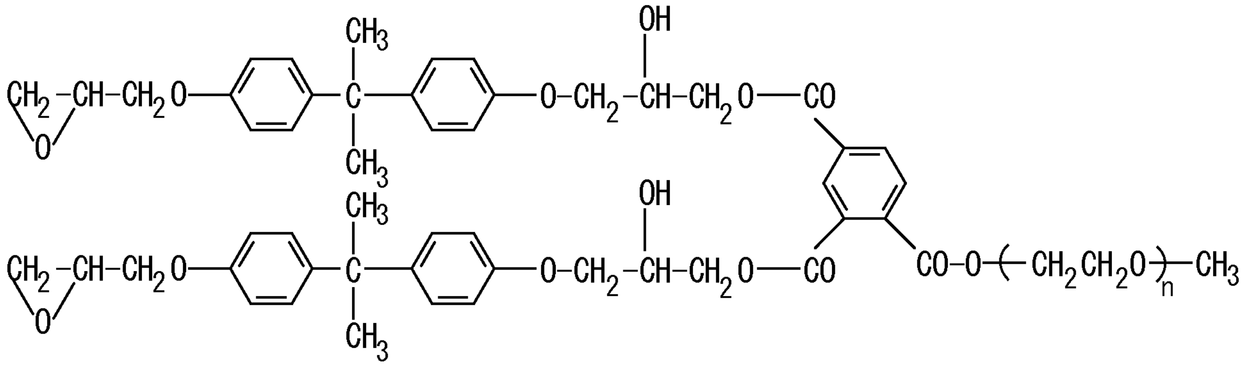

(where n represents the number of repeating units).

The epoxy equivalent of the water-dispersible epoxy resin (1) was 1474 [g/eq]. The NMR chart of this water-dispersible epoxy resin (1) is shown in Fig. 4. The absorption near 65 ppm shown in Fig. 4 confirms the presence of a carbon atom bonded to a secondary hydroxyl group of the compound represented by formula (AE1) above. This confirms the presence of a reaction product between the carboxy-group-containing compound [(A)-1] obtained in step 1 and the bisphenol A type epoxy resin.

<Step 3>

In this step, 148 g of the water-dispersible epoxy resin (1) (epoxy equivalent: 1474) obtained in step 2 and 1000 g of epoxy resin ("EPICLON 1055" produced by DIC Corporation) were mixed, water was added thereto in 10 divided portions while stirring, and an epoxy resin emulsion (1) was obtained as a result. The properties of the epoxy resin emulsion (1) obtained as such were 59.5% nonvolatile matter and a viscosity (B-type viscometer) of 2780 mPa·s.

(Production Example 2)

An epoxy resin emulsion (2) was obtained as in Production Example 1 except that in step 3 of Production Example 1, 148 g of the water-dispersible epoxy resin (1) (epoxy equivalent: 1474), 1000 g of epoxy resin ("EPICLON 1055"), and 128 g of butyl cellosolve(ethylene glycol mono-n-butyl ether) were mixed. The properties of the epoxy resin emulsion (2) obtained as such were 61.1% nonvolatile matter and a viscosity of 15000 mPa·s.

(Production Example 3)

An epoxy resin emulsion (3) was obtained as in Production Example 1 except that in step 3 of Production Example 1, 148 g of the water-dispersible epoxy resin (1) (epoxy equivalent: 1474), 1000 g of epoxy resin ("EPICLON 1055"), and 128 g of propylene glycol mono-n-propyl ether were mixed. The properties of the epoxy resin emulsion (3) obtained as such were 60.1% nonvolatile matter and a viscosity of 6600 mPa·s.

(Production Example 4)

An epoxy resin emulsion (4) was obtained as in Production Example 1 except that in step 3 of Production Example 1, 148 g of the water-dispersible epoxy resin (1) (epoxy equivalent: 1474), 1000 g of epoxy resin ("EPICLON 1055"), and 203 g of methyl ethyl ketone were mixed and that after addition of water, methyl ethyl ketone was distilled away by reduced pressure distillation. The properties of the epoxy resin emulsion (4) obtained as such were 60.1% nonvolatile matter and a viscosity of 300 mPa·s.

(Comparative Production Example 1) Production of main ingredient

<Step 1>

Into a four-necked glass flask equipped with a thermometer, a stirrer, a nitrogen inlet tube, and a cooling tube, 1000 g of polyethylene glycol having a number-average molecular weight of 2000 (hydroxyl value: 28.0 mgKOH/g) and 180 g of hexahydrophthalic anhydride were charged and reaction was conducted for 3 hours at 100°C at an acid anhydride

group/hydroxyl group equivalent ratio of 1.02. As a result, a carboxy-group-containing compound [(A)-2] having an acid value of 49 mgKOH/g was obtained.

<Step 2>

Into a four-necked glass flask equipped with a thermometer, a stirrer, a nitrogen inlet tube, and a cooling tube, 1145 g of the carboxy-group-containing compound [(A)-2] having an acid value of 49 mgKOH/g obtained in step 1, 340 g of epoxy resin [(B)-2] ("EPICLON 830S" produced by DIC Corporation) and 3 g of triethanolamine were charged and the reaction was conducted at 150°C for 8 hours with 1.0 mol of epoxy resin per equivalent of carboxy groups. The reaction was terminated at an acid value of 0 mgKOH/g and a water-dispersible epoxy resin (2) was obtained. The epoxy equivalent of the water-dispersible epoxy resin (2) obtained as such was 1485 [g/eq].

<Step 3>

In this step, 150 g of the water-dispersible epoxy resin (2) (epoxy equivalent: 1485) obtained in step 2 and 1000 g of epoxy resin ("EPICLON 1055") were mixed, water was added thereto in divided portions while stirring, and an epoxy resin emulsion (5) was obtained as a result. The properties of the epoxy resin emulsion (5) obtained as such were 61.3% nonvolatile matter and a viscosity of 5000 mPa·s.

(Production Example 5) Production of curing agent

<Step 1> (Synthesis of intermediate, bisphenol-type epoxy resin solution)

Into a four-necked glass flask equipped with a thermometer, a stirrer, and a nitrogen inlet tube, 300 parts of bisphenol A type epoxy resin ("EPICLON 850" produced by DIC Corporation) having an epoxy equivalent of 188 [g/eq] and 87.9 parts of bisphenol A were charged and heated to 80°C to obtain a homogeneous mixture. To the resulting homogeneous mixture, 0.1 parts of tetramethylammonium chloride (a 50% aqueous solution) was added, and the reaction was conducted for 3 hours at 140°C under stirring. Then 129.3 parts of butyl cellosolve was added and stirred to prepare an epoxy resin solution (K-1) having an epoxy equivalent of 480 [g/eq] and 75% nonvolatile matter.

<Step 2> (Synthesis of water-based resin intermediate)

Into a four-necked flask equipped with a thermometer, a stirrer, and a nitrogen inlet tube, 188 parts of bisphenol A type epoxy resin ("EPICLON 850") having an epoxy equivalent of 188 [g/eq] and 17.4 parts of tolylene diisocyanate ("COSMONATE T-80" produced by Mitsui Takeda Chemicals Inc.) were charged. Then, the temperature was raised to 50°C, 1.55 parts of ethylene glycol was added thereto, and reaction was conducted at 80°C for 2 hours. Next, to the resulting reaction mixture, 722 parts of poly(oxypropylene/oxyethylene)amine ("JEFFAMINE M-1000" produced by Huntsman, active hydrogen equivalent: 505 g/eq) was added under cooling. Then stirring was conducted for 5 hours at 100°C, 398 parts of butyl cellosolve was added to the reaction mixture, and the resulting mixture was stirred and homogenized to obtain a resin (K-2) having a nonvolatile content of 70%.

<Step 3> (Preparation of curing agent)

Into a four-necked flask equipped with a thermometer, a stirrer, and a nitrogen inlet tube, 640 parts of the bisphenol type epoxy resin solution (K-1) obtained in step 1 was charged, the temperature was raised to 90°C, and 176.3 parts of the water-based resin intermediate (K-2) obtained in step 2 was added thereto, followed by stirring for 2 hours at 100°C. After completion of the stirring, 102.8 parts of butyl cellosolve was charged, and 37.3 parts of monoethanolamine was added at 70°C, followed by stirring at 100°C for 3 hours. Then cooling was started and 928 parts of ion exchange water was added dropwise in 4 hours. The liquid temperature during dropwise addition of water was controlled to 40°C to 50°C. Next, 28.3 parts of a styrenated phenol emulsifier ("Noigen EA-207D" produced by Dai-ichi Kogyo Seiyaku Co., Ltd.) was added thereto and the resulting mixture was stirred and homogenized to obtain a water-based resin composition (K-3) having a nonvolatile content of 34 mass%. The weight-average molecular weight of the resin component constituting the nonvolatile matter of the water-based resin composition (K-3) was 33,000. Next, the water-based resin composition (K-3) and a curing agent ("DOCURE KH-700" produced by KUKDO Chemical Co., Ltd., Korea) were mixed at 604/100 (mass basis) by using a mixer ("ARE-310" produced by THINKY) to prepare a curing agent.

(Examples 1 to 4 and Comparative Example 1)

The epoxy resin emulsions (main ingredients) obtained in Production Examples 1 to 4 and Comparative Production Example 1 and the curing agent obtained in Production Example 5 were mixed at a ratio described in Table 1 below by using a mixer ("ARE-310" produced by THINKY) and each of the resulting mixtures was applied to a steel sheet (SPCC-SB conforming to JIS G3141 produced by Engineering Test Service, the steel sheet was degreased with xylene and water-polished with a #240 sand paper) by using a bar coater. The obtained coating film was 50 μm thick. This coating film was cured at 25°C for 1 week and then subjected to various tests under conditions described below. The results are shown in Table 1.

[Table 1]

| | | Example 1 | Example 2 | Example 3 | Example 4 | Comparative Example 1 |
|---|---|---|---|---|---|---|
| Blend ratio (mass ratio) | Epoxy resin emulsion (1) | 100 | | | | |
| | Epoxy resin emulsion (2) | | 100 | | | |
| | Epoxy resin emulsion (3) | | | 100 | | |
| | Epoxy resin emulsion (4) | | | | 100 | |
| | Epoxy resin emulsion (5) | | | | | 100 |
| | Water | 8.2 | 11.1 | 9.3 | 9.3 | 11.5 |
| | Curing agent | 81.9 | 84.1 | 82.7 | 82.7 | 87.8 |
| Evaluation results | Emulsion stability | B | A | A | A | A |
| Evaluation results for coating films | Impact strength | A | A | A | A | A |
| | Crosscut test | 1 | 1 | 1 | 1 | 3 |
| | Pencil hardness | HB | B | HB | HB | B |
| | Flexibility | A | A | A | A | A |
| | Alkali resistance | A | A | A | A | A |
| | Water resistance | A | A | A | A | A |
| | Corrosion resistance | 2.0 | 2.0 | 2.0 | 2.0 | 3.0 |

[Emulsion stability]

Into a 100 mL mayonnaise bottle, 90 g of the epoxy resin emulsion was weighed and placed for each example and stored at room temperature (25°C). After elapse of a particular period of time, the appearance was observed with naked eye.

A: No settling or separation
B: Separation observed
C: Aggregates occurred

[Impact strength]

The impact strength was measured with a DuPont impact tester according to JIS K5600-5-3 (1999) with a 1/2

inch impact head at a load of 1000 g.

A: No cracking upon impact from 50 cm
F: Cracks occurred upon impact from 50 cm

[Crosscut test]

In accordance with JIS K-5600-5-6 (1999), cuts were made at intervals of 1 mm, an adhesive tape was attached and peeled, and the state of the coating film after peeling was observed with naked eye.

0: The edges of the cuts are completely smooth and none of the coating on the grid squares is detached.
1: Small flakes have detached at intersections, affecting no more than about 5% of the crosscut area.
2: Flakes have detached along edges and at intersections of cuts. More than 5% but not more than 15% of the crosscut area is affected.
3: The coating has flaked in long strips along edges partly or entirely and in various parts of the squares partly or entirely. More than 15% but not more than 35% of the crosscut area is affected.
4: The coating has flaked in long strips along edges partly or entirely and in various parts of the squares partly or entirely. More than 35% but not more than 65% of the crosscut area is affected.
5: The extent of flaking exceeded the level 4 above.

[Pencil hardness]

According to JIS K5600-5-4, a pencil is held at about 45° with respect to a test coating film and pushed forward for about 10 mm at a constant speed against the coating film using a pressure just short of breaking the lead. The scale of the hardness of the hardest pencil that did not break the coating film was assumed to be the pencil hardness.

[Flexibility]

According to JIS K-5600-5-1 (1999), the coating film was bent using a cylindrical mandrel (2 mm in diameter) and presence or absence of the cracks in the coating film and separation of the coating film from the substrate were observed.

A: No cracking or separation occurred
F: Cracking and/or separation occurred

[Alkali resistance]

Each sample plate was immersed in a 5% aqueous sodium hydroxide solution at 25°C for 1 week and the appearance was observed.

A: Good appearance
F: Low gloss, blistering, and/or cracking was found in the coating film

[Water resistance]

Each sample plate was immersed in water at 25°C for 1 week and then the appearance was observed.

A: Good appearance
F: Low gloss, blistering, and/or cracking was found in the coating film

[Corrosion resistance]

According to JIS K-5600-7-1 (1999), crosscuts were made in a test piece with a cutter, and the test piece was placed in a tester and subjected to 300 hour testing. The width of the blistering developed from the crosscuts in the coating film is indicated. The unit is mm.

## Claims

1. A water-dispersible epoxy resin obtained by allowing a compound (A) having two or more carboxy groups in a molecule to react with an epoxy resin (B) having two or more epoxy groups in a molecule,
wherein the compound (A) is obtained by an esterification reaction of a polyethylene glycol monoalkyl ether (A-1) having a number-average molecular weight of 400 to 10000 and an acid anhydride (A-2) derived from a polyvalent carboxylic acid having three or four carboxy groups in a molecule in such a manner that two or more carboxy groups are present in a molecule.

2. The water-dispersible epoxy resin according to Claim 1, being represented by general formula (I):

[Chem. 1]

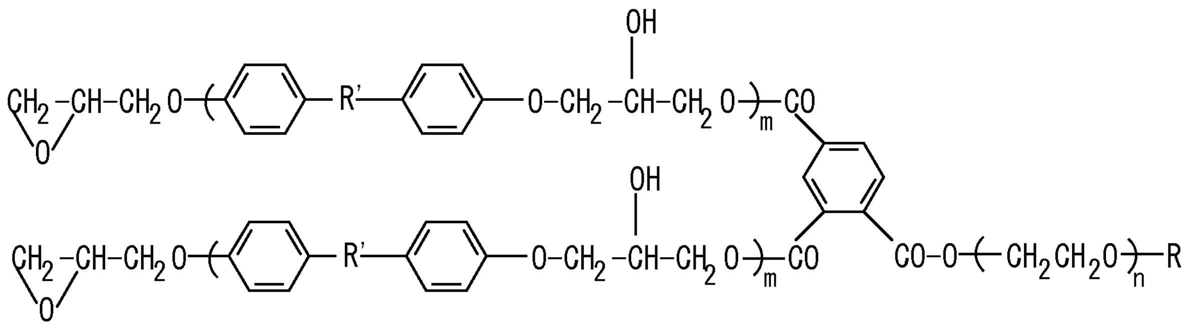

(where R represents an alkyl group having 1 to 12 carbon atoms, R' represents an alkylidene group having 1 to 3 carbon atoms or a sulfonyl group, and m and n each represent the number of repeating units).

3. The water-dispersible epoxy resin according to Claim 2, wherein, in general formula (I), R is an alkyl group having 1 to 4 carbon atoms, R' is a methylene group or a 2,2-propylene group, and m is 1.

4. A method for producing a water-dispersible epoxy resin, the method comprising a step of obtaining a compound (A) having two or more carboxy groups in a molecule by an esterification reaction of a polyethylene glycol monoalkyl ether (A-1) having a number-average molecular weight of 400 to 10000 and an acid anhydride (A-2) derived from a polyvalent carboxylic acid having three or four carboxy groups in a molecule in such a manner that the ratio of acid anhydride groups (-COOCO-) of the acid anhydride (A-2) to hydroxyl groups of the polyethylene glycol monoalkyl ether (A-1) is within the range of 1 to 1.2; and a step of allowing the compound (A) to react with an epoxy resin (B) having two or more epoxy groups in a molecule.

5. A water-dispersible epoxy resin composition comprising 5 to 70 parts by mass of the water-dispersible epoxy resin ($\alpha$) according to Claim 1 and 30 to 95 parts by mass of an epoxy resin ($\beta$) (excluding the water-dispersible epoxy resin ($\alpha$)) having two or more epoxy groups in a molecule.

6. A water-based epoxy resin composition comprising the water-dispersible epoxy resin composition according to Claim 5 and a water-based solvent ($\gamma$).

7. The water-based epoxy resin composition according to Claim 6, wherein the water-dispersible epoxy resin composition is dispersed in the water-based solvent ($\gamma$).

8. A cured product obtained by curing the water-based epoxy resin composition according to Claim 6 or 7.

FIG. 1

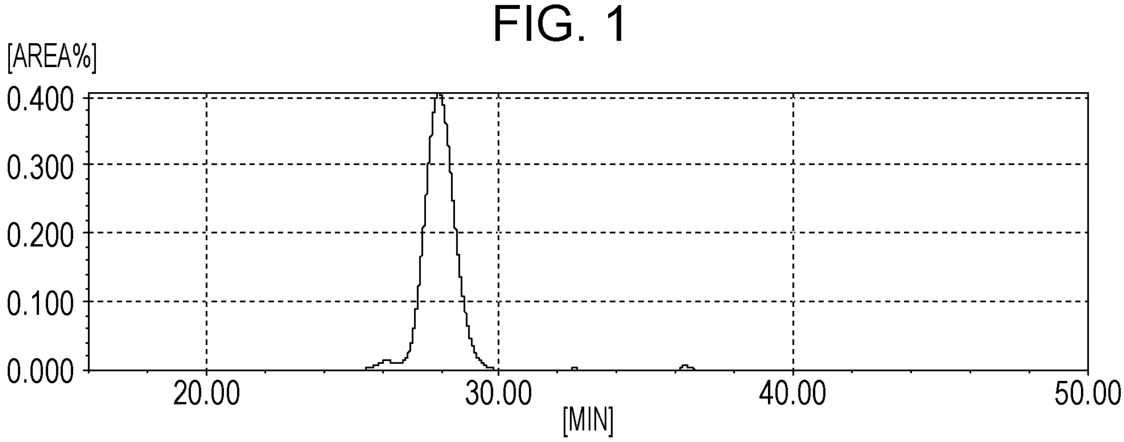


FIG. 2

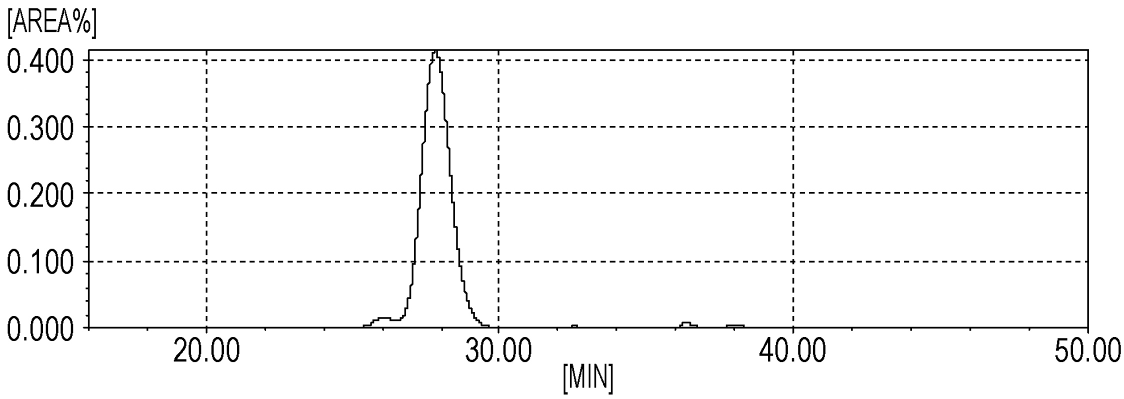


FIG. 3

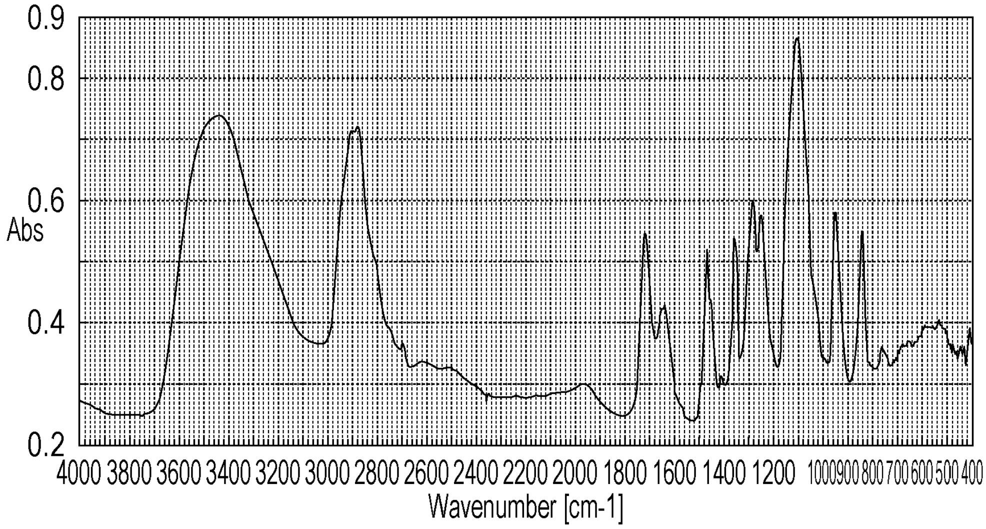

FIG. 4

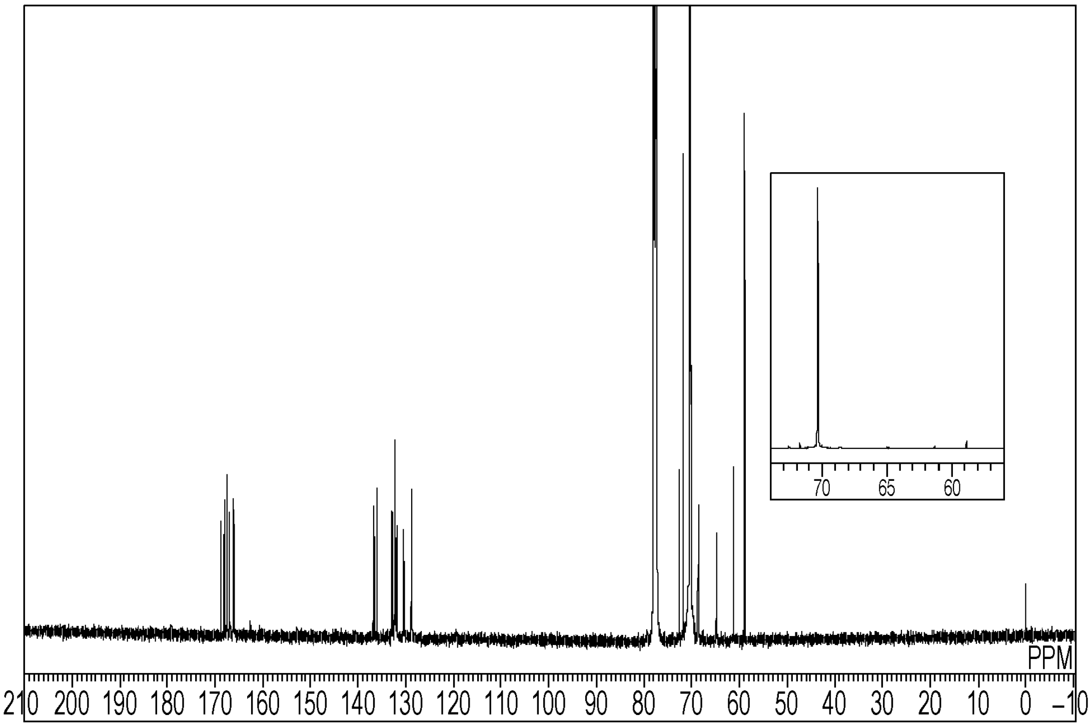
70
65
60
PPM
210
200
190
180
170
160
150
140
130
120
110
100
90
80
70
60
50
40
30
20
10
0
−10

**INTERNATIONAL SEARCH REPORT**

International application No.
PCT/JP2011/071441

A. CLASSIFICATION OF SUBJECT MATTER
*C08G59/42*(2006.01)i

According to International Patent Classification (IPC) or to both national classification and IPC

B. FIELDS SEARCHED

Minimum documentation searched (classification system followed by classification symbols)
C08G59/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 07-206982 A (Asahi Denka Co., Ltd.), 08 August 1995 (08.08.1995), entire text (Family: none) | 1-8 |
| A | JP 07-309954 A (Dainippon Ink and Chemicals, Inc.), 28 November 1995 (28.11.1995), entire text (Family: none) | 1-8 |
| A | JP 2002-053847 A (Asahi Denka Co., Ltd.), 19 February 2002 (19.02.2002), entire text (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
12 December, 2011 (12.12.11)

Date of mailing of the international search report
20 December, 2011 (20.12.11)

Name and mailing address of the ISA/
Japanese Patent Office

Facsimile No.

Authorized officer

Telephone No.

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4315044 A
- US 4399242 A
- JP 2038443 A
- JP 7206982 A